# EUROPEAN PATENT SPECIFICATION

(11) **EP 2 362 967 B1**
(45) Date of publication and mention of the grant of the patent: **30.09.2015**
(21) Application number: 08876908.8
(22) Date of filing: 01.12.2008
(51) Int. Cl.: G21C 17/10, G21C 17/08, G21C 13/02, G01B 7/14, G21C 19/20

(54) **APPARATUS AND METHOD FOR AUTOMATICALLY AND REMOTELY MEASURING THE INTERNAL GAP OF A REACTOR**
VORRICHTUNG UND VERFAHREN ZUR AUTOMATISCHEN MESSUNG DES INNENSPALTS EINES REAKTORS AUS DER FERNE
APPAREIL ET PROCÉDÉ DE MESURE AUTOMATIQUE ET À DISTANCE DES ESPACES INTÉRIEURS D'UN RÉACTEUR

(43) Date of publication of application: 07.09.2011
(73) Proprietor: Korea Hydro&Nuclear Power Co., Ltd., Seoul 135-971 (KR)
(72) Inventor: LEE, Jae Gon, Daejeon 302-754 (KR); KANG, Yong Chul, Daejeon 305-728 (KR); KO, Do Young, Daejeon 305-755 (KR); SHIN, Jae Taek, Gyeonggi-do (KR)
(74) Representative: Isarpatent
(86) International application number: PCT/KR2008/007095
(87) International publication number: WO 2010/064740

(56) References cited:
- EP-A1- 0 827 158
- EP-A1- 0 827 158
- JP-A- 11 002 689
- JP-A- 2000 356 697
- KR-A- 19990 042 113
- KR-A- 19990 042 113
- US-A- 4 707 325
- US-A- 5 550 883

## Description

### BACKGROUND OF THE INVENTION

### Field of the Invention

The present invention relates to a remote, precise gap-measuring apparatus for automatically measuring a gap between reactor internals, and particularly a remote, precise gap-measuring apparatus for automatically measuring the gap so that a gap between a nuclear reactor vessel protrusion and a core support barrel protrusion meets an allowable gap requirement when a core support barrel, a core shroud and a lower support structure are assembled and installed in a nuclear reactor vessel in nuclear plant construction.

### Description of the Related Art

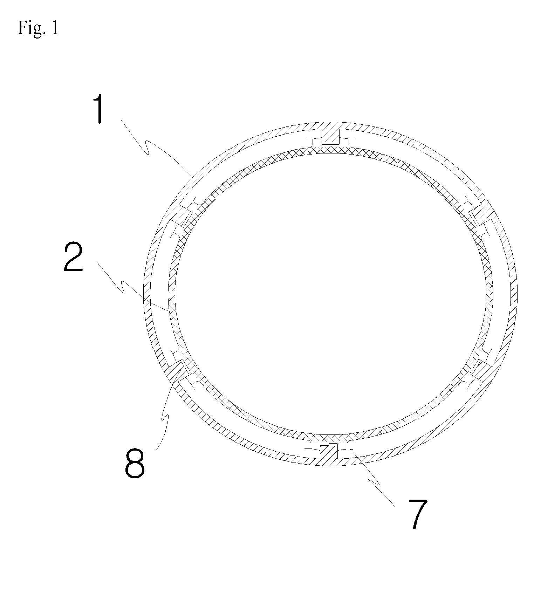

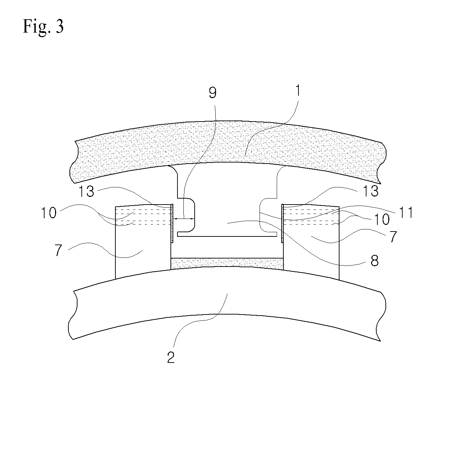

Fig. 1 is a horizontal cross-sectional view showing conventional reactor internals. Fig, 2 is a vertical cross-sectional view showing the conventional reactor internals. Fig. 3 is a partial cross-sectional view showing a gap 9 between a core support barrel protrusion 7 and a nuclear reactor vessel protrusion 8 in a conventional nuclear reactor.

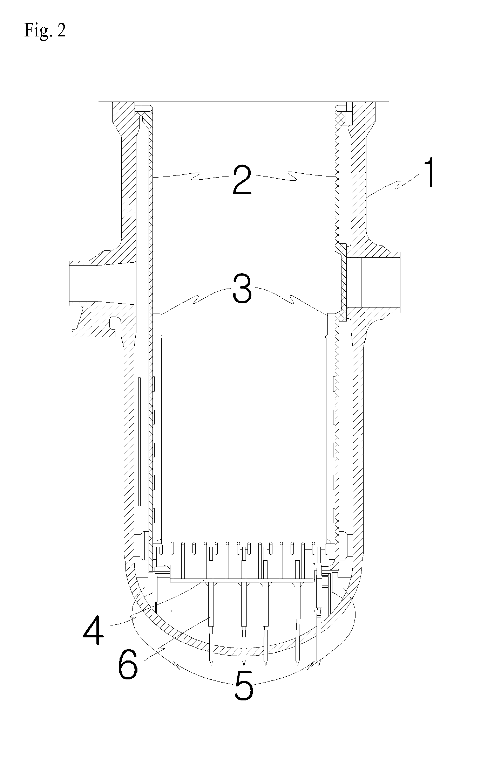

Referring to Figs. 1 to 3, in conventional nuclear plant construction, a core support barrel 2, a core shroud 3 and a lower support structure 4 are installed in a nuclear reactor vessel 1. The core support barrel 2 is provided separately from the core shroud 3 and the lower support structure 4, and assembled with them.

Here, the core shroud 3 and the lower support structure 4 are provided as an assembled structure from a factory.

Two individual components are assembled in the construction field because a measurer goes down to a lower space of the nuclear reactor vessel 1 in person to measure the gap 9 between the core support barrel protrusion 7 and the nuclear reactor vessel protrusion 8.

Therefore, the core support barrel 2 is provided separately from the core shroud 3 and the lower support structure 4, and assembled with them so that a measurer can go down to the lower space of the nuclear reactor vessel 1 .

In order to measure the gap 9 - i.e., the distance between the core support barrel protrusion 7 and the nuclear reactor vessel protrusion 8 - only the core support barrel 2 is installed in the nuclear reactor vessel 1 without being assembled with the core shroud 3 and the lower support structure 4. Then, a measurer enters the nuclear reactor vessel 1 and measures the gap 9 to precisely determine the dimensions of a filler (not shown) based on the dimensions of the gap 9. Then, the filler is manufactured according to the determined dimensions and installed in a recess 11 of the nuclear reactor vessel protrusion.

After the filler is installed, the core support barrel 2 is assembled with the nuclear reactor vessel 1 again. Then, a measurer enters the lower space of the nuclear reactor vessel 1 and core support barrel 2, and measures the gap 9 again to finally verify whether the gap 9 will meet an allowable gap requirement after the reactor internals are assembled.

If the gap 9 meets the allowable gap requirement, the core shroud 3 and the lower support structure 4 are welded to a lower flange of the core support barrel 2 (the whole welded assembly is defined as "a core support barrel assembly"). The core support barrel assembly is assembled with the nuclear reactor vessel 1.

When such a conventional assembling method is used, it takes a few months to conduct a manual gap-measuring process, a welding process and a non-destructive examination process. Therefore, the construction period and construction costs of a nuclear power plant are increased.

Hereinafter, such a process for installing reactor internals is described in more detail with reference to Figs. 1 to 3.

As shown in Fig. 1, the nuclear reactor comprises the nuclear reactor vessel 1, a nuclear reactor vessel cover (not shown) and a control rod driving mechanism (not shown). In the nuclear reactor vessel 1, a nuclear fuel rod bundle (not shown), a core shroud 3 which surrounds the nuclear fuel rod bundle, and a core support barrel 2 which supports the nuclear fuel rod bundle, are installed.

The lower support structure 4 which is installed on the lower part of the core shroud 3 and nuclear fuel rod bundle, supports the weight of the core shroud 3 and nuclear fuel rod bundle. The lower support structure 4 is disposed on a core bracket 5 in the nuclear reactor.

Heat, which is generated by nuclear fission chain reaction of the nuclear fuel rod bundle, is decreased by the low-temperature coolant which flows in an entry nozzle.

The coolant, the temperature of which has been increased by the heat, is transferred through an outlet nozzle to a steam generator to generate steam which rotates a turbine to generate electric energy.

The nuclear reactor vessel protrusion 8 is engaged between the core support barrel protrusions 7 which are disposed on the lower part of the core support barrel 2, whereby the core support barrel 2 is assembled with the nuclear reactor vessel 1.

The engaged assembling between the nuclear reactor vessel protrusion 8 and the core support barrel protrusions 7 constrains the radial or circumferential displacement of the core support barrel assembly.

The engaged assembling is required to have a final allowable gap between the nuclear reactor vessel protrusion 8 and the core support barrel protrusion 7 in order to prevent the nuclear reactor and its internals from being deformed by the contact between them when they are expanded by the high temperature which is generated by the nuclear fission chain reaction.

In order to meet the allowable gap requirement, the process for measuring the gap 9 and determining the thickness of the filler based on the measured value is required.

In nuclear power plant construction, a conventional process for installing the core support barrel 2, the core shroud 3 and the lower support structure 4 in the nuclear reactor vessel 1 is described below.

First, the gap 9 between the surface of a surface-hardening part 13 of the core support barrel protrusion 7 and the surface of the recess 11 of the nuclear reactor vessel protrusion 8 is measured after only the core support barrel 2 is inserted into the nuclear reactor vessel 1.

After the core support barrel 2 is inserted into the nuclear reactor vessel 1, a measurer goes down to the lower space of the nuclear reactor vessel 1 and inserts a gap-measuring device into a measurement opening of the core support barrel protrusion 7 to measure the gap 9 between the nuclear reactor vessel protrusion 8 and the core support barrel protrusion 7.

The gap 9 must be measured at 72 points, 12 points of which are located at each of six protrusions which are arranged at every 60°location along the circumference of the nuclear reactor vessel 1.

Therefore, conventionally, it takes several weeks to measure the gap 9, determine the dimension of the filler and manufacture the filler.

Considering the allowable gap requirement for the final assembled structures, the dimension of the filler is determined based on the measured value of the gap 9. According to the determined dimension, the filler is manufactured to be installed on the nuclear reactor vessel protrusion 8.

A reference point for measuring the gap 9 is the surface of the surface-hardening part 13, which is disposed on the inner surface of the core support barrel 2.

In order to verify whether the final gap 9 is within the allowable gap requirement after the filler is installed on the nuclear reactor vessel protrusion 8, the core support barrel 2 is again inserted into the nuclear reactor vessel 1, and then a measurer goes down to the lower space of the nuclear reactor vessel 1 and verifies it with a filler gauge.

If it is verified that the final gap 9 meets the allowable gap requirement, the core support barrel 2 is lifted up out of the nuclear reactor vessel 1, and then the core support barrel 2, the core shroud 3 and the lower support structure 4 are welded into an integrated body.

It usually takes several weeks to conduct such a welding process, which is conducted outside of the nuclear reactor vessel 1.

The core support barrel 2 is assembled with the core shroud 3 and the lower support structure 4. Such an integrated structure is referred to as a core support barrel assembly.

The core support barrel assembly, into which two components are integrated, is assembled with the nuclear reactor vessel 1, and then the subsequent assembling process for reactor internals is conducted.

In a conventional method for installing the nuclear reactor, in order to provide enough space for a measurer to measure the gap 9 in person in the lower space of the nuclear reactor vessel 1, the core support barrel 2 cannot be assembled with the core shroud 3 and the lower support structure 4 before the gap-measuring process. Therefore, after the final gap 9 is verified to meet the allowable gap requirement, two components (the nuclear reactor vessel 1; and the core shroud 3 / the lower support structure 4) are finally welded into one component.

Because the welding process for manufacturing the core support barrel assembly must follow the process for verifying the dimension of the filler after measuring the gap 9, it is included in a critical process for assembling reactor internals.

In a conventional process for measuring the gap 9, the measurement period and the construction period are increased because it takes a long time to manually measure 72 points of the gaps in a narrow space.

Furthermore, in a conventional process for measuring the gap 9, it is hard to obtain the objective measured value because a measurer must measure 72 points in a very narrow space.

Prior art document KR-10-1999-0042113 A discloses an apparatus and a method for measuring a gap between a nuclear reactor vessel protrusion and a core support barrel protrusion using linear variable differential transformer digital probes.

### SUMMARY OF THE INVENTION

A purpose of the present invention is to provide a remote, precise gap-measuring apparatus for automatically measuring a gap between a nuclear reactor vessel protrusion and a core support barrel protrusion by using a digital probe in a process for manufacturing and assembling a nuclear reactor, thereby reducing the time for measuring the gap and facilitating manufacture of a core support barrel assembly by welding a core support barrel, a core shroud and a lower support structure before the process of measuring the gap.

In order to achieve the above purpose, a precise gap-measuring apparatus according to the present invention is defined in claim 1.

A respective method according to the invention is defined in claim 3.

The effect of the remote, precise gap-measuring apparatus and method according to the present invention is that the core support barrel assembly to which the core support barrel, the core shroud and the lower support structure are welded can be manufactured before the process of measuring the gap between the nuclear reactor vessel and the core support barrel, thereby removing the welding process from a critical process and remarkably reducing the construction period.

The remote, precise gap-measuring apparatus and method according to the present invention has other effects, which are that the gap can be measured without a measurer having to enter the lower space of the reactor vessel; the period of measuring many points can be decreased; the reliability of the measured value can be guaranteed; and the measured value can be verified objectively.

The remote, precise gap-measuring apparatus and method according to the present invention has another effect, which is that the measurement can be completely conducted in a remote place, whereby a measurer need not enter a poor working environment, such as a narrow space, and operation efficiency can be improved.

Conventionally, a polar crane has to be used for a long time to lift up the core support barrel and the core support barrel assembly because they need to be repeatedly assembled and disassembled in the nuclear reactor vessel. However, the present invention can decrease the operating time of the polar crane remarkably because the core support barrel assembly needs to be assembled and disassembled only twice. Therefore, the polar crane can be used in other processes, resulting in productivity enhancement.

### BRIEF DESCRIPTION OF THE DRAWING

Figs. 1 and 2 are cross-sectional views showing reactor internals.
Figs. 3 is a partial cross-sectional view showing a gap between a nuclear reactor vessel protrusion and a core support barrel protrusion.
Figs. 4 is a schematic view showing a remote, precise gap-measuring apparatus according to the present invention.
Figs. 5 is a partial cross-sectional view showing a nuclear reactor vessel protrusion and a core support barrel protrusion on which a digital probe is installed.
Figs. 6 and 7 are cross-sectional views showing the reactor internals on which the remote, precise gap-measuring apparatus according to the present invention is installed.

### DETAILED DESCRIPTION OF THE INVENTION

Hereinafter, a preferred embodiment of a remote, precise gap-measuring apparatus according to the present invention will be explained in more detail with reference to the accompanying drawings.

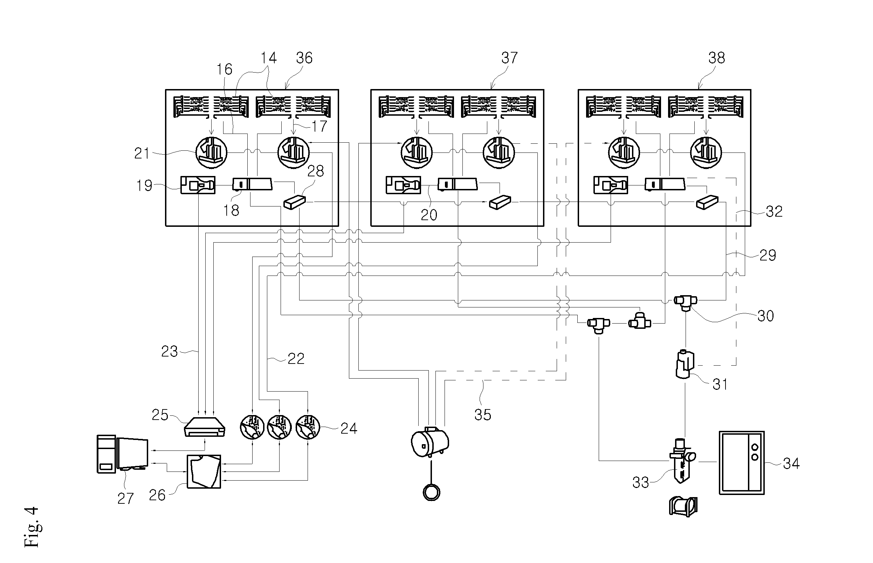

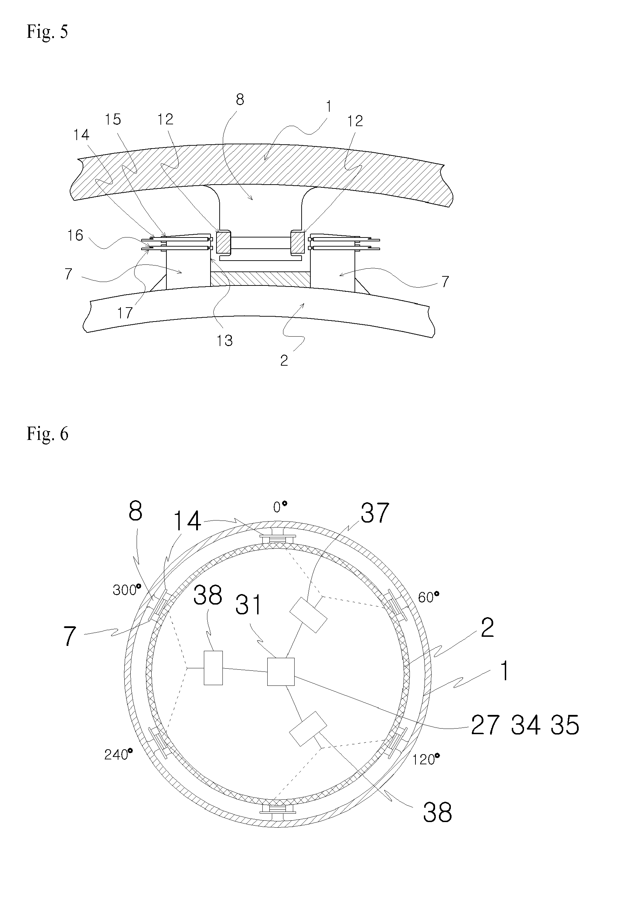

Fig. 4 is a schematic view showing the remote, precise gap-measuring apparatus according to the present invention, and Fig. 5 is an assembled view of a standard block gauge and a sensor.

As shown in Fig. 4, the remote, precise gap-measuring apparatus comprises a plurality of digital probes 14 for measuring distance, a data-processing section, an air section for operating the digital probe and a power-supply section.

Four (4) to six (6) of the digital probes 14 may be inserted into a core support barrel protrusion 7.

In order to decrease the time and costs for efficiently measuring a gap, it is preferable to insert at least four digital probes 14 into the core support barrel protrusion 7.

Therefore, sixteen (16) to twenty-four (24) of the digital probes 14 may be coupled to each of three (3) chambers 36, 37 and 38, and thus the total number of the digital probes 14 may be forty-eight (48) to seventy-two (72).

Here, each of the chambers 36, 37 and 38 may comprise a solenoid valve 18 for controlling the compressed air, an air hose 16, a data cable 17, a probe interface module 21, an RS-485 communication cable 22, an RS-422 communication cable 20 and an air distributor 28.

The chambers 36, 37 and 38 are coupled to a computer 27 via an RS232-422 converter 19 to control the solenoid valve 18, and the data which are measured by the digital probe 14 is displayed on the computer 27 via a USB module 24 and a USB hub 26.

The compressed air for operating the digital probe 14 is supplied by an air compressor 34 via a normal-type air cleaning unit 33, a precision-type remote air pressure regulator 31, an air hose 29 and a distributor 30 to each of the chambers 36, 37 and 38.

The compressed air which is supplied to the chambers 36, 37 and 38 is discharged after the digital probe 14 is operated. In order to recycle the discharged air, the recycling air hose 29 is coupled to the distributor 30.

The remote air pressure regulator 31 is coupled to the solenoid valve 18 and a signal cable 32, and thus a computer 27 can remotely control air pressure.

The probe interface module 21 is coupled to a power cable 35 for supplying power.

The digital probe 14 for measuring a gap 9 may employ a linear variable differential transformer (LVDT), and the LVDT digital probe 14 measures distance by making contact with an object to be measured.

The LVDT digital probe 14 is available in micrometer unit.

The diameter of the digital probe 14 which is employed in the present invention is determined such that the digital probe 14 can be inserted into a measurement opening 10 of the core support barrel protrusion 7, which has been used in a conventional manual measurement. The length of the digital probe 14 is determined to be short enough to prevent the digital probe 14 from making contact with a nuclear reactor vessel 1 during the core support barrel assembly is inserted into the nuclear reactor vessel 1.

The digital probe 14 is operated by compressed air.

Fig. 5 is a cross-sectional view showing that the digital probe 14 is installed in the core support barrel protrusion 7. The digital probe 14 is inserted into the core support barrel protrusion 7 and then fixed therein by a digital probe-fixing member 15.

The gap 9 between the core support barrel protrusion 7 and the recess 11 of the nuclear reactor vessel protrusion 8 is usually several tens of millimeters in length, but the measuring range of the digital probe 14 is shorter than the gap 9. Therefore, a standard block gauge 12 which is several tens of millimeters in thickness, is installed in the recess 11, wherein the dimension of the standard block gauge 12 has been precisely verified in advance.

Therefore, the remote, precise gap-measuring apparatus illustrated in Fig. 4 measures the distance from the surface-hardening part 13 to the standard block gauge 12 or the distance from the surface-hardening part 13 to the surface of a filler.

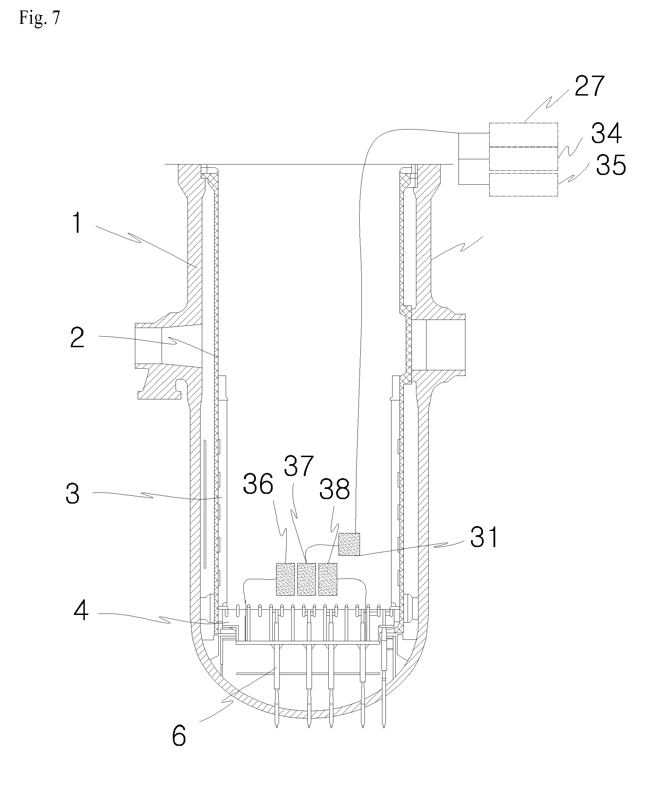

Figs. 6 and 7 are cross-sectional views showing that the remote, precise gap-measuring apparatus according to the present invention is arranged for measuring the gap. As shown in Figs. 6 and 7, three chambers 36, 37 and 38 are disposed in the lower space of the core support barrel assembly, and the computer 27, the air compressor 34 and a power cable 35 are disposed outside of the nuclear reactor vessel 1.

The chambers 36, 37 and 38 are coupled to the core support barrel protrusion 7 by the digital probes 14 and their cables, and coupled to the computer 27 and the air compressor 34 by a cable and a hose.

The remote, precise gap-measuring apparatus having the aforementioned constitution is used to measure the distance between the surface-hardening part 13 of the core support barrel protrusion 7 and the recess 11 of the nuclear reactor vessel protrusion 8.

However, because the distance between the surface-hardening part 13 of the core support barrel protrusion 7 and the recess 11 usually exceeds the measuring range of the digital probe 14, the standard block gauge 12, the thickness of which has been verified in advance, is installed in the recess 11.

Therefore, the digital probe 14 actually measures the distance from the surface-hardening part 13 to the standard block gauge 12.

The gap 9 is obtained by summing up the thickness of the standard block gauge 12 and the distance, which is measured by the remote, precise gap-measuring apparatus.

Hereinafter, a remote, precise gap-measuring apparatus and its method of use according to the present invention will be explained in more detail.

The digital probe 14 is inserted into the core support barrel protrusion 7 via a lower opening of the lower support structure 4 and the core shroud 3, and fixed in the measurement opening 10 by the digital probe-fixing member 15.

When the digital probe 14 is installed in the core support barrel protrusion 7, because the process for corresponding the end of the digital probe 14 to the surface-hardening part 13 of the core support barrel 2 (i.e., zero-adjustment process) must be conducted, the digital probe 14 must be disposed within the minimum measuring range of the digital probe 14.

Therefore, the end of the digital probe 14 is disposed more than 1 mm inside of the surface-hardening part 13.

After the digital probe 14 is installed, power is supplied, and the air compressor 34 is operated. Then, the zero- adjustment process is conducted by using a computer measurement program.

The zero- adjustment process is conducted in such a manner that after the zero-adjustment device which can be completely (i.e., without a gap) contacted with the surface-hardening part 13 of the core support barrel 2 is disposed on the surface-hardening part 13, the digital probe 14 measures the distance to the zero- adjustment device.

After the zero-adjustment process is completed, the cables 20, 22 and 23, and the hose 29 are removed from the chambers 36, 37 and 38, the computer 27 and the air compressor 34.

The computer 27 and the air compressor 34 are separated from the chambers 36, 37 and 38. Then, in the state in which the chambers 36, 37 and 38 are disposed in the lower space of the core support barrel assembly, and the digital probe 14 is installed in the core support barrel protrusion 7, the core support barrel assembly is inserted into the nuclear reactor vessel 1 and arranged therein.

The core support barrel protrusions 7 are engaged with the nuclear reactor vessel protrusion 8 on which the standard block gauge 12 is installed.

After the core support barrel assembly is completely arranged in the nuclear reactor vessel 1, the chambers 36, 37 and 38 are coupled again to the computer 27 and the air compressor 34 by the cables 20, 22 and 23, and the hose 29.

After this coupling is completed, the power is supplied and the distance is measured by using the measurement program.

The distance may be measured at all points at the same time, or may be individually measured at certain points.

The dimension of the filler is determined and manufactured based on the gap 9 which is summed up from the measured distance and the thickness of the standard block gauge 12.

After the core support barrel assembly is lifted up out of the nuclear reactor vessel 1, the manufactured filler is installed in the recess 11 of the nuclear reactor vessel protrusion 8.

After the filler is installed, the core support barrel assembly is inserted again into the nuclear reactor vessel 1. After the distance to the filler is measured again, it is verified whether the measured distance meets the allowable gap requirement.

If the measured distance meets the allowable gap requirement, the core support barrel assembly is lifted up again out of the nuclear reactor vessel 1, and the remote, precise gap-measuring apparatus is removed from the core support barrel assembly. Then, the core support barrel assembly is again installed in the nuclear reactor vessel 1.

As described above, the remote, precise gap-measuring apparatus and its method of use can be applied to a process for manufacturing a nuclear reactor by manufacturing the core support barrel assembly which is integrally welded from the core support barrel 2, the core shroud 3 and the lower support structure 4, as well as a conventional process for manufacturing a nuclear reactor.

## Claims

1. A remote, precise gap-measuring apparatus for a nuclear reactor comprising a nuclear reactor vessel (1), a core support barrel (2), a core shroud (3) and a lower support structure (4),
said remote, precise gap-measuring apparatus comprising:
a plurality of digital probes (14) suitable for measuring a gap (9) between a recess (11) of the nuclear reactor vessel protrusion (8) and a surface-hardening part (13) of a core support barrel protrusion (7),
said nuclear reactor vessel protrusion (8) being disposed on an inner surface of the nuclear reactor vessel (1), the core support barrel protrusion (7) being disposed on an outer surface of the core support barrel (2) and engaged with the nuclear reactor vessel protrusion (8);
a computer (27) coupled to the digital probes (14) to display and store a measured value of the gap (9) measured by the digital probes (14);
a solenoid valve (18) controlled by the computer (27),
wherein the solenoid valve (18) is adapted to control compressed air supplied through an air hose (16) to operate the digital probe (14);
an air compressor (34) supplying the compressed air to the digital probes (14); and
a standard block gauge (12) capable of being inserted in the gap (9),
**characterized in that** the digital probes (14) are configured to measure the gap (9) distance from the surface-hardening part (13) to the standard block gauge (12) after the core support barrel (2) is inserted into the nuclear reactor vessel (1), and after the core support barrel (2), the core shroud (3) and the lower support structure (4) are welded to each other.

2. The remote, precise gap-measuring apparatus according to Claim 1, wherein the nuclear reactor vessel protrusion (8) is engaged between the core support barrel protrusions (7), and wherein four to six of the digital probes (14) are installed in the core support barrel protrusion (7).

3. A remote, precise gap-measuring method comprising steps of:
(a) assembling a core support barrel (2), a core shroud (3) and a lower support structure (4) by welding,
the core support barrel (2) disposed in a nuclear reactor vessel (1) to support a nuclear fuel rod bundle,
the core shroud (3) disposed in the core support barrel (2) to surround the nuclear fuel rod bundle,
the lower support structure (4) disposed in a lower part of the core shroud (3) to support the nuclear fuel rod bundle;
(b) inserting a standard block gauge (12) into a gap (9) between a nuclear reactor vessel protrusion (8) and a surface-hardening part (13) of a core support barrel protrusion (7), and
(c) measuring the gap (9) distance from the surface-hardening part (13) to the standard block gauge (12) by a plurality of digital probes (14) after the step (a),
wherein the nuclear reactor vessel protrusion (8) is disposed on an inner surface of the nuclear reactor vessel (1), the core support barrel protrusions (7) being disposed on an outer surface of the core support barrel (2) and engaged with the nuclear reactor vessel protrusions (8) to keep the core support barrel (2) stable.

## Patentansprüche

1. Fern-Präzisionsspaltmessvorrichtung für einen Kernreaktor, der einen Kernreaktorbehälter (1), eine Kernstütztrommel (2), einen Kernmantel (3) und eine untere Stützstruktur (4) umfasst,
wobei die Fern-Präzisionsspaltmessvorrichtung Folgendes umfasst:
mehrere digitale Sonden (14), die zum Messen eines Spalts (9) zwischen einer Aussparung (11) des Kernreaktorbehältervorsprungs (8) und einem Oberflächenhärtungsteil (13) eines Kernstütztrommelvorsprungs (7) eingerichtet sind,
wobei der Kernreaktorbehältervorsprung (8) an einer Innenfläche des Kernreaktorbehälters (1) angeordnet ist,
wobei der Kernstütztrommelvorsprung (7) an einer Außenfläche der Kernstütztrommel (2) angeordnet ist und mit dem Kernreaktorbehältervorsprung (8) im Eingriff steht;
einen Rechner (27), der mit den digitalen Sonden (14) gekoppelt ist, um einen durch die digitalen Sonden (14) gemessenen Messwert des Spalts (9) anzuzeigen und zu speichern;
ein durch den Rechner (27) gesteuertes Magnetventil (18),
wobei das Magnetventil (18) dafür ausgelegt ist, Druckluft zu regeln, die über einen Luftschlauch (16) zugeführt wird, um die digitale Sonde (14) zu betreiben;
einen Luftkompressor (34), der die Druckluft zu den digitalen Sonden (14) leitet; und
ein Standard-Blockendmaß (12), das in den Spalt (9) eingeführt werden kann,
**dadurch gekennzeichnet, dass** die digitalen Sonden (14) dafür ausgebildet sind, die Distanz des Spalts (9) von dem Oberflächenhärtungsteil (13) zu dem Standard-Blockendmaß (12) zu messen, nachdem die Kernstütztrommel (2) in den Kernreaktorbehälter (1) eingeführt wurde und nachdem die Kernstütztrommel (2), der Kernmantel (3) und die untere Stützstruktur (4) miteinander verschweißt wurden.

2. Fern-Präzisionsspaltmessvorrichtung nach Anspruch 1, wobei der Kernreaktorbehältervorsprung (8) zwischen den Kernstütztrommelvorsprüngen (7) in Eingriff genommen ist und wobei vier bis sechs der digitalen Sonden (14) in dem Kernstütztrommelvorsprung (7) installiert sind.

3. Fern-Präzisionsspaltmessverfahren, das folgende Schritte umfasst:
(a) Zusammenfügen einer Kernstütztrommel (2), eines Kernmantels (3) und einer unteren Stützstruktur (4) durch Schweißen,
wobei die Kernstütztrommel (2) in einem Kernreaktorbehälter (1) angeordnet ist, um ein Kernbrennstabbündel zu stützen,
wobei der Kernmantel (3) in der Kernstütztrommel (2) angeordnet ist, um das Kernbrennstabbündel zu umfangen, wobei die untere Stützstruktur (4) in einem unteren Teil des Kernmantels (3) angeordnet ist, um das Kernbrennstabbündel zu stützen;
(b) Einführen eines Standard-Blockendmaßes (12) in einen Spalt (9) zwischen einem Kernreaktorbehältervorsprung (8) und einem Oberflächenhärtungsteil (13) eines Kernstütztrommelvorsprungs (7), und
(c) Messen der Distanz des Spalts (9) von dem Oberflächenhärtungsteil (13) zu dem Standard-Blockendmaß (12) durch mehrere digitale Sonden (14) nach Schritt (a),
wobei der Kernreaktorbehältervorsprung (8) an einer Innenfläche des Kernreaktorbehälters (1) angeordnet ist, wobei die Kernstütztrommelvorsprünge (7) an einer Außenfläche der Kernstütztrommel (2) angeordnet sind und mit den Kernreaktorbehältervorsprüngen (8) im Eingriff stehen, um die Kernstütztrommel (2) stabil zu halten.

## Revendications

1. Appareil de mesure d'espace précis et à distance pour un réacteur comprenant une cuve de réacteur nucléaire (1), un cylindre de support de coeur (2), une enveloppe de coeur (3) et une structure de support inférieure (4), ledit appareil de mesure d'espace précis et à distance comprenant :
une pluralité de sondes numériques (14) aptes à mesurer un espace (9) entre un évidement (11) de la saillie de la cuve de réacteur nucléaire (8) et un élément de durcissement de surface (13) d'une saillie du cylindre de support de coeur (7),
ladite saillie de la cuve de réacteur nucléaire (8) étant disposée sur une surface intérieure de la cuve de réacteur nucléaire (1), la saillie du cylindre de support de coeur (7) étant disposée sur une surface extérieure du cylindre de support de coeur (2) et en prise avec la saillie de la cuve de réacteur nucléaire (8) ;
un ordinateur (27) couplé aux sondes numériques (14) de façon à afficher et à mémoriser une valeur mesurée de l'espace (9) mesuré par les sondes numériques (14) ;
une électrovanne (18) commandée par l'ordinateur (27), dans lequel l'électrovanne (18) est adaptée pour asservir l'air comprimé distribué par un tuyau d'air (16) pour actionner la sonde numérique (14) ;
un compresseur d'air (34) alimentant les sondes numériques (14) en air comprimé ; et
une cale étalon (12) standard apte à être insérée dans l'espace (9),
**caractérisé par le fait que** les sondes numériques (14) sont configurées pour mesurer la distance de l'espace (9) depuis l'élément de durcissement de surface (13) jusqu'à la cale étalon (12) standard une fois que le cylindre de support de coeur (2) est inséré dans la cuve de réacteur nucléaire (1), et après que le cylindre de support de coeur (2), l'enveloppe de coeur (3) et la structure de support inférieure (4) ont été soudés les uns aux autres.

2. Appareil de mesure d'espace précis et à distance selon la revendication 1,
dans lequel la saillie de la cuve de réacteur nucléaire (8) est en prise entre les saillies du cylindre de support de coeur (7), et dans lequel quatre à six sondes numériques (14) sont installées dans la saillie du cylindre de support de coeur (7).

3. Procédé de mesure d'espace précis et à distance comprenant les étapes de :
(a) assemblage d'un cylindre de support de coeur (2), d'une enveloppe de coeur (3) et d'une structure de support inférieure (4) par soudage,
le cylindre de support de coeur (2) disposé dans une cuve de réacteur nucléaire (1) pour supporter un faisceau de barres de combustibles nucléaires,
l'enveloppe de coeur (3) disposée dans le cylindre de support de coeur (2) pour entourer le faisceau de barres de combustibles nucléaires,
la structure de support inférieure (4) disposée dans une partie inférieure de l'enveloppe de coeur (3) pour supporter le faisceau de barres de combustibles nucléaires ;
(b) insertion d'une cale étalon (12) standard dans un espace (9) entre une saillie de la cuve de réacteur nucléaire (8) et un élément de durcissement de surface (13) d'une saillie du cylindre de support de coeur (7), et
(c) mesure de la distance de l'espace (9) depuis l'élément de durcissement de surface (13) jusqu'à la cale étalon (12) standard par une pluralité de sondes numériques (14) après l'étape (a),
dans lequel la saillie de la cuve de réacteur nucléaire (8) est disposée sur la surface intérieure de la cuve de réacteur nucléaire (1), les saillies du cylindre de support de coeur (7) étant disposées sur une surface extérieure du corps de support de coeur (2) et venant en prise avec les saillies de la cuve de réacteur nucléaire (8) pour maintenir le cylindre de support de coeur (2) stable.
